(19) **Europäisches Patentamt**

**European Patent Office**

**Office européen des brevets**

(11) **EP 1 122 558 A1**

(12) # DEMANDE DE BREVET EUROPEEN

(43) Date de publication:
**08.08.2001 Bulletin 2001/32**

(51) Int Cl.⁷: **G01V 1/047**

(21) Numéro de dépôt: **01400051.7**

(22) Date de dépôt: **10.01.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **01.02.2000 FR 0001271**

(71) Demandeur: **INSTITUT FRANCAIS DU PETROLE**
**92852 Rueil-Malmaison Cedex (FR)**

(72) Inventeurs:
• **Dubois, Jean-Claude**
**19550 Lapleau (FR)**
• **Becquey, Marc**
**92500 Rueil-Malmaison (FR)**

(54) **Vibrateur et méthode d'exploration d'un milieu matériel par des vibrations élastiques à très basse fréquence**

(57)     Vibrateur (1) comportant un générateur de vibrations unique (2) couplé avec le milieu (M) par un élément de couplage (3) et des moyens de commande du générateur adaptés à lui appliquer, à chaque émission, un signal pilote unique (s(t)) obtenu par la combinaison d'au moins deux signaux de fréquences différentes fixes ou de préférence variables à l'intérieur de bandes de fréquence au moins partiellement disjointes, et des moyens de transmission élastique non linéaire adaptés à engendrer dans le milieu des vibrations à une fréquence dépendant de la différence des fréquences des deux signaux vibratoires.

La méthode d'exploration comporte une mise en oeuvre du vibrateur (1) pour émettre des vibrations à très basse fréquence dans le milieu, la réception par des capteurs (R) des ondes renvoyées par le milieu en réponse aux vibrations émises et leur enregistrement, et la sélection par corrélation des signaux vibratoires avec un signal synthétique dont la fréquence est en relation avec la différence des fréquences des signaux constituant le signal pilote.

Applications dans le domaine de la prospection sismique par exemple.

FIG.1

$$S(t) = S_1(t) + S_2(t)$$

$$y(t) = aS(t) + bS(t)^2 + \ldots$$

M

EP 1 122 558 A1

## Description

La présente invention a pour objet un vibrateur adapté à émettre des vibrations à fréquence très basse et une méthode utilisant ce vibrateur pour explorer un milieu matériel avec des vibrations à très basse fréquence.

Le vibrateur selon l'invention peut être utilisé dans de nombreux domaines où l'on a besoin de vibrations de très basses fréquences, notamment pour réaliser l'exploration d'un milieu par ondes élastiques, notamment pour faire de la prospection sismique de structures géologiques, ou pour réaliser des tests de structure, en génie civil par exemple, etc.

## Etat de la technique

Les vibrateurs comportent généralement un générateur de vibrations de type quelconque : électro-hydrauliques, à masselottes excentrées, à moteur piézoélectrique, etc., une masse réactive et un émetteur ou élément de couplage tel qu'une plaque, un pavillon, une tige, etc., en contact avec le milieu de propagation des ondes, pour exercer sur lui une force constante dans une certaine gamme du balayage de fréquence. Le mouvement de l'élément de couplage est asservi à un signal pilote. L'élément de couplage peut être posé sur la surface du milieu ou en contact avec les parois d'un trou ou d'une cavité creusé dans le milieu.

L'excursion en fréquence du vibrateur est limitée à la fois du côté des basses fréquences et de celui des hautes fréquences par certaines contingences techniques. En ce qui concerne la limite haute, elle est réduite du fait de la résonance de la cavité acoustique formée par la plaque et la première interface entre couches d'impédances différentes. Elle dépend donc de la structure du milieu. La limite pratique dans le sol est par exemple à des fréquences de l'ordre de 180 Hz pour lesquelles la cavité présente un coefficient de qualité suffisant pour faire décrocher l'asservissement en phase de la plaque. Le mouvement de la plaque étant réglé pour exercer une force constante, le déplacement de la masse qui exerce cette force par réaction sur la plaque est d'autant plus grand que la fréquence est plus basse. La limite inférieure de la bande de fréquence possible est conditionnée par la course maximum de cette masse.

Une méthode connue pour obtenir des ondes élastiques à plus basse fréquence est utilisée dans des applications marines. Elle consiste à utiliser des antennes dites paramétriques au moyen desquelles on émet des faisceaux très directifs d'ondes à des fréquences proches en direction d'une cible commune. La propagation des faisceaux vers la cible se fait sur un mode linéaire. Sous l'action énergique des deux faisceaux, la cible réagit de façon non-linéaire. Les signaux d'intermodulation des deux faisceaux sont rayonnés par la cible et en particulier celui concernant la différence de fréquences. Le milieu solide est ici éloigné des sources de vibrations. Cette méthode est décrite dans le brevet FR 2 412 853 du demandeur.

Une autre méthode connue pour engendrer dans un milieu solide des ondes élastiques à basse fréquence, est mise en oeuvre par exemple dans le brevet FR 1.542.973. Elle consiste essentiellement à faire interférer les vibrations produites par deux vibrateurs distincts grâce à un élément mélangeur non-linéaire, de façon à obtenir une fréquence de battement plus basse. Les vibrateurs sont par exemple des vibrateurs à masselottes orbitantes et les vibrations qu'ils engendrent sont appliquées par l'intermédiaire de barres résonnantes reposant sur un socle reposant sur le milieu solide par l'intermédiaire de l'élément de couplage non linéaire. Cet élément mélangeur peut être par exemple un tapis ou une plaque en caoutchouc ou bien une couche superficielle du sol sur lequel le socle repose.

Cette technique qui consiste à faire interférer les vibrations de vibrateurs sismiques distincts ne fournit, à l'expérience, de résultats intéressants que lorsque les éléments de couplage (plaques ou pavillons) sont quasi jointifs. Cela veut dire que la partie du sol, objet de contraintes élevées amenant un fonctionnement non-linéaire, ne s'étend pas de façon significative au-delà de la surface occupée par la chaque élément de couplage. Les mesures montrent en général que la tranche de sol qui détermine le couplage d'un vibrateur est faible, de l'ordre de quelques décimètres.

## Le vibrateur et la méthode selon l'invention.

Le vibrateur selon l'invention comporte un générateur de vibrations unique et au moins un élément de couplage pour la transmission des vibrations au milieu. Il est caractérisé en ce qu'il comporte des moyens de commande du générateur adaptés à lui appliquer (à chaque émission) un signal pilote unique obtenu par la combinaison d'au moins deux signaux de fréquences différentes et des moyens de transmission élastique non linéaire adaptés à engendrer dans le milieu des vibrations à une fréquence dépendant de la différence des fréquences des deux signaux vibratoires.

Les moyens de transmission élastique non linéaire incluent par exemple un élément de transmission élastique non linéaire interposé entre l'élément de couplage et le milieu matériel, qui peut être réalisé dans un matériau présentant une discontinuité dans la courbe de variation de la déformation en fonction de la compression appliquée ou bien encore inclure au moins une couche du milieu au contact de l'élément de couplage.

Les moyens de commande pour engendrer le signal pilote peuvent comporter un oscillateur à fréquence fixe et un oscillateur dont la fréquence peut varier à l'intérieur d'une plage de fréquence déterminée ou bien deux oscillateurs à fréquence variable variant chacune à l'intérieur d'une plage de fréquence déterminée, à croissance ou décroissance linéaire par exemple.

Les moyens de commande peuvent comporter par exemple un premier oscillateur dont la fréquence croît linéairement dans une première plage de fréquence, et un deuxième oscillateur dont la fréquence décroît linéairement dans une deuxième plage de fréquence distincte de la première ou bien encore deux oscillateurs dont les fréquences varient linéairement dans le même sens, avec des pentes différentes, à l'intérieur de deux plages de variation distinctes l'une de l'autre.

La méthode d'exploration d'un milieu matériel par des vibrations à fréquence très basse selon l'invention comporte l'émission par le vibrateur de vibrations dans le milieu, la réception des signaux émanant du milieu en réponse aux vibrations émises et l'enregistrement des signaux reçus.

Elle est caractérisée en ce que l'on applique à au moins un vibrateur, en contact avec le milieu par un élément de couplage, au moins un signal pilote composite obtenu par combinaison d'au moins deux signaux vibratoires de fréquences différentes et on applique les signaux engendrés par le vibrateur par l'intermédiaire de moyens de transmission élastique non linéaire (tels qu'un élément de transmission élastique non linéaire et/ou une couche du milieu à travers laquelle le vibrateur applique les vibrations engendrées) de manière à engendrer dans le milieu des vibrations dont le spectre d'émission inclut au moins une fréquence égale à la différence des fréquences des deux signaux vibratoires.

On fait varier de préférence la fréquence d'un des signaux (ou des deux signaux) entrant dans la combinaison à l'intérieur d'une bande de fréquence.

Suivant un mode de mise en oeuvre, on pilote le vibrateur successivement par le premier signal pilote et par un deuxième signal pilote obtenu en déphasant les deux signaux vibratoires d'un quart de période.

Suivant un mode de mise en oeuvre, on pilote le vibrateur successivement par un premier signal pilote, un deuxième signal pilote obtenu en déphasant les deux signaux vibratoires d'un quart de période et par deux autres signaux pilotes respectivement déphasés d'une demi-période par rapport au premier et au deuxième signal pilote.

La méthode comporte par exemple une sélection, parmi les dits signaux provenant du milieu, de ceux qui sont relatifs à la différence des fréquences des deux signaux combinés, cette sélection étant obtenue par corrélation avec un signal synthétique.

Comme signal synthétique, on utilise par exemple un signal dont la fréquence est la différence des deux fréquences ou en dépend.

Suivant un mode de mise en oeuvre, le milieu où les vibrations sont engendrées étant une formation géologique, on capte les ondes élastiques renvoyées par les discontinuités du milieu, et on les combine avec des signaux dépendant des signaux émis (ou dépendant des signaux émis), pour former une image sismique du sous-sol.

## Présentation des figures

D'autres caractéristiques et avantages du vibrateur et de la méthode de mise en oeuvre associée, apparaîtront à la lecture de la description ci-après d'un exemple non limitatif de mise en oeuvre dans le cadre d'opérations de prospection sismique du sous-sol, en se référant aux dessins annexés où :

- la Fig. 1 montre schématiquement un vibrateur tel qu'on en utilise par exemple en prospection sismique terrestre, produisant des très basses fréquences uniquement par l'effet de la non linéarité de la couche superficielle du sol contre lequel le vibrateur est plaqué ;

- la Fig.2 montre une variante du mode de mise en oeuvre précédent où l'effet non linéaire est accentué par interposition d'une plaque souple non linéaire ;

- la Fig.3 montre un exemple de courbe de variation de la déformation d'une plaque en fonction de la compression qui lui est appliquée, présentant une zone de discontinuité non linéaire ;

- les Fig.4a, 4b, 4c montrent différents exemples de spectre A(f) de signaux sismiques reçus en réponse à l'émission dans le sol au travers de moyens élastiques non linéaires, dans le cas où le signal pilote est obtenu par combinaison de deux signaux à fréquences glissant linéairement dans deux bandes de fréquence (sweeps) avec recouvrement 24-96 Hz et 16-64Hz respectivement, pour un taux d'intermodulation de 50 % (Fig.4a) et 5 % (Fig.4b,4c), avec un signal pilote d'amplitude constante (Fig. 4a, 4b) et d'amplitude constante avec pondération d'amplitude sur les bords (Fig.4c) ;

- les Fig.5a à 5c montrent des exemples de signaux Sc résultant de la corrélation des signaux reçus, dont les spectres sont illustrés aux Fig.4, par un signal de référence dont la fréquence est la différence des fréquences de balayage, constituant le nouveau signal pilote ;

- les Fig.6a à 6c montrent respectivement les spectres correspondants B(f) des signaux que l'on obtient après corrélation des signaux Sc illustrés aux Fig.5 ;

- les Fig.7a à 7c, 8a à 8c et 9a à 9c sont analogues respectivement aux Fig.4a à 4c, Sa à 5c et 6a à 6c et illustrent le cas où les deux fréquences sont respectivement dans les bandes 40 à 96 Hz et 32 à 64 Hz ;

- les Fig.10a à 10c montrent des exemples de signaux Sc que l'on obtient en corrélant des signaux reçus correspondant respectivement à une séquence d'émission simple, à une séquence double (deux séquences émises en alternance) et une séquence quadruple (quatre séquences émises en alternance) ;

- les Fig.11a à 11c montrent respectivement les spectres B(f) que l'on obtient suite aux corrélations précédentes ; et

- la Fig.12 montre schématiquement le module de commande du générateur de vibrations.

## DESCRIPTION DETAILLEE

La méthode pour engendrer des vibrations à très basse fréquence, objet de l'invention, consiste essentiellement à coupler avec un milieu M de propagation, par l'intermédiaire de moyens élastiques non-linéaires, un vibrateur unique actionné par un signal pilote composite obtenu par mélange d'au moins une paire de signaux de fréquences différentes, fixes ou glissant à l'intérieur de bandes de fréquence différentes avec ou sans recouvrement. Ce vibrateur peut être de tout type : électro-hydraulique, électromagnétique, piézo-électrique, etc.

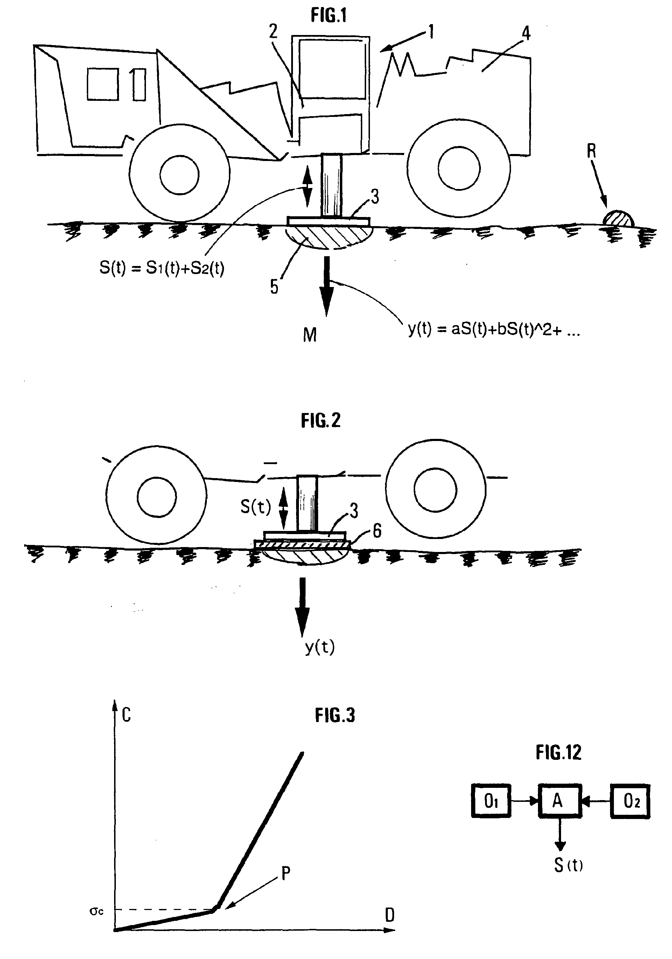

Dans les exemples qui vont être donnés ci-après, on a considéré le cas d'une application à la prospection sismique terrestre avec utilisation d'un vibrateur 1 comprenant (Fig.1) un générateur de vibrations 2 de type électro-hydraulique par exemple, et une plaque d'embase ou pavillon 3. Le vibrateur est installé sur un camion 4. En opération, il est couplé avec le sol par application sur lui d'une partie au moins du poids du camion.

Les moyens élastiques non-linéaires peuvent être une couche superficielle 5 non consolidée du sol (Fig.1). Pour renforcer si nécessaire la non linéarité, on peut intercaler entre l'élément de couplage 3 et la couche 5 une couche élastique 6 réalisée par exemple à base d'élastomères chargés en poudre de carbone (Fig.2) qui présente (Fig. 3) une zone non-linéaire P dans sa courbe de variation de la déformation D en fonction de la compression C appliquée. Dans ce cas, on ajuste la charge appliquée par le camion pour se trouver dans cette zone non linéaire.

En réponse à un signal s(t) qui leur est appliqué, ces moyens élastiques non-linéaires produisent un signal complexe exprimé par un développement du type :

$$Y(t) = a.s(t) + b.s^2(t) + c.s^3(t) + ...$$

Pour une sinusoïde $s(t) = \sin(2\pi ft)$, la fréquence double est générée par le deuxième terme, la fréquence triple par le troisième, etc. Le gain de conversion est donné par le rapport b/a ou c/a.

Pour obtenir une fréquence inférieure à la fréquence fondamentale, on applique au générateur de vibrations 2 un signal pilote s(t) formé par sommation de deux signaux de fréquences instantanées différentes : $s(t) = \sin(2\pi f_1 t) + \sin(2\pi f_2 t)$ où $f_2 > f_1$. En réponse au signal vibratoire composite, les moyens de couplage non-linéaires produisent aussi le second terme :

$$bs^2(t) = b\left(1 - \frac{1}{2}\left[\cos(4\pi f_1 t) + \cos(4\pi f_2 t)\right] + \cos\left[2\pi(f_2 - f_1)t\right] - \cos\left[2\pi(f_2 + f_1)t\right]\right)$$

où, outre les fréquences doubles des signaux d'entrée, on retrouve leur somme et surtout leur différence qui va permettre l'extension du signal émis dans le sol vers les basses fréquences. Si les fréquences des deux signaux combinés sont par exemple, 12Hz et 10Hz, on obtient un signal de type $b \cos[2\pi(f_2 - f_1)t]$ dont la fréquence est de 2Hz, et donc très inférieure à celles que l'on peut obtenir en pratique avec les vibrateurs usuels.

Ce signal composite s(t) est généré par un module de commande associé à deux oscillateurs O1, O2 (Fig.12).

**Applications à la prospection sismique**

Pour des opérations de prospection sismique, on utilise de préférence des vibrations à fréquences glissantes. On fait donc varier les fréquences $f_1$ et $f_2$ dans des plages de fréquence différentes : $f_{1min} < f_1 < f_{1max}$, et $f_{2min} < f_2 < f_{2max}$.

Les signaux renvoyés par les discontinuités du milieu sont captés par des récepteurs R couplés avec la surface et enregistrés. En corrélant par un pseudo- signal pilote synthétique approprié les signaux sismiques reçus, on peut en outre produire un signal impulsionnel correspondant à chacun des domaines spectraux suivants :

Bande de fréquence double de celle du premier signal (corrélation par un signal dont la fréquence instantanée est $2 f_1$) : entre $2 f_{1min}$ et $2 f_{1max}$.

Bande de fréquence double de celle du deuxième signal (corrélation par un signal dont la fréquence instantanée est $2f_2$) : entre $2 f_{2min}$ et $2 f_{2max}$.

Bande de fréquence somme des fréquences des deux signaux de base (corrélation par un signal dont la fréquence instantanée est $(f_1+f_2)$) : entre $(f_{2min} + f_{1min})$ à $(f_{2max} + f_{1max})$.

Bande de fréquence différence des fréquences des deux signaux de base (corrélation par un signal dont la fréquence instantanée $(f_2-f_1)$) : entre $(f_{2min}- f_{1min})$ à $(f_{2max}- f_{1max})$.

On dispose donc d'une possibilité de synthèse de fréquences, dans laquelle la sélection se fait par corrélation. La qualité du résultat de cette corrélation dépend de l'amplitude et du caractère des autres signaux qui ne sont pas « concernés » par elle, mais qui sont présents dans la même bande. Cette perturbation se manifeste par un augmentation du niveau des ondulations latérales au pic de corrélation (bruit de corrélation). Il est donc utile de nettoyer le signal émis (et donc le signal reçu) des produits d'intermodulation inutiles.

**Amélioration de la pureté du signal recherché**

Par un choix de rotations de phase appropriées appliquées aux deux composantes de fréquences $f_1$ et $f_2$ du signal pilote pour des émissions successives en un même lieu, on peut éliminer (ou fortement atténuer) les termes indésirables, pour ne conserver que celui relatif par exemple à la différence des fréquences. Cela nécessite l'enregistrement des signaux sismiques reçus correspondant respectivement aux différents signaux pilotes et leur sommation avant corrélation.

Si on considère le terme du deuxième degré examiné précédemment, on améliore la pureté du signal correspondant à la différence des fréquences en émettant successivement le signal pilote $s_1(t) = \sin(2\pi f_1 t) + \sin(2\pi f_2 t)$ défini précédemment puis un autre signal pilote dont les deux composantes sont déphasées de $\pi/2$ soit $s_2(t) = \cos(2\pi f_1 t) + \cos(2\pi f_2 t)$, les signaux sismiques reçus en réponse étant enregistrés séparément. Ce terme du deuxième degré devient pour le deuxième signal pilote :

$$bs_2^2(t) = b\left(1 + \frac{1}{2}\left[\cos(4\pi f_1 t) + \cos(4\pi f_2 t)\right] + \cos\left[2\pi(f_2 - f_1)t\right] + \cos\left[2\pi(f_2 + f_1)t\right]\right)$$

Par addition des deux séquences enregistrées, les termes en $2f_1$ et $2f_2$ s'éliminent ainsi que celui à la fréquence-somme $(f_1 + f_2)$, le terme à la fréquence-différence $(f_2 - f_1)$, étant conservé.

Si l'on ne souhaite pas exploiter la corrélation avec la fondamentale, on peut poursuivre dans cette voie en utilisant une suite de quatre signaux-pilotes composée des deux précédents et des deux mêmes changés de signe (déphasés de $\pi$). Se faisant, on élimine en plus tous les termes impairs du développement initial dont celui à la fréquence fondamentale qui a un poids élevé, ce qui améliore considérablement la qualité du signal recherché.

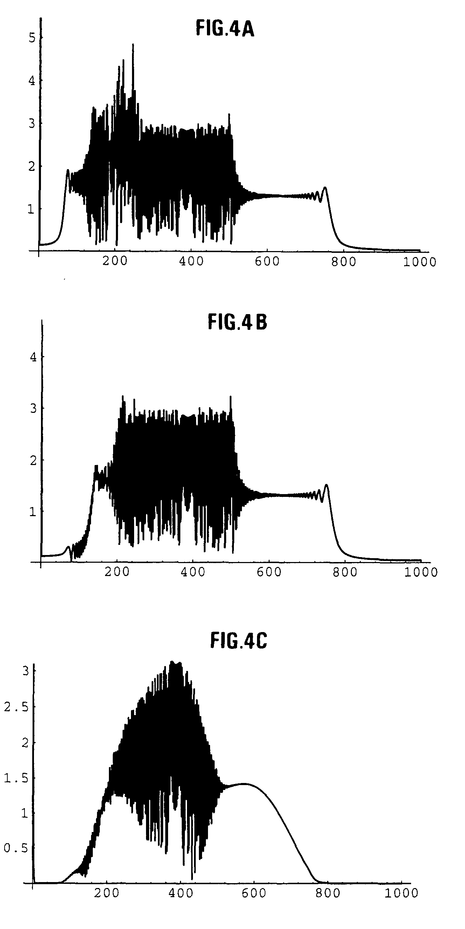

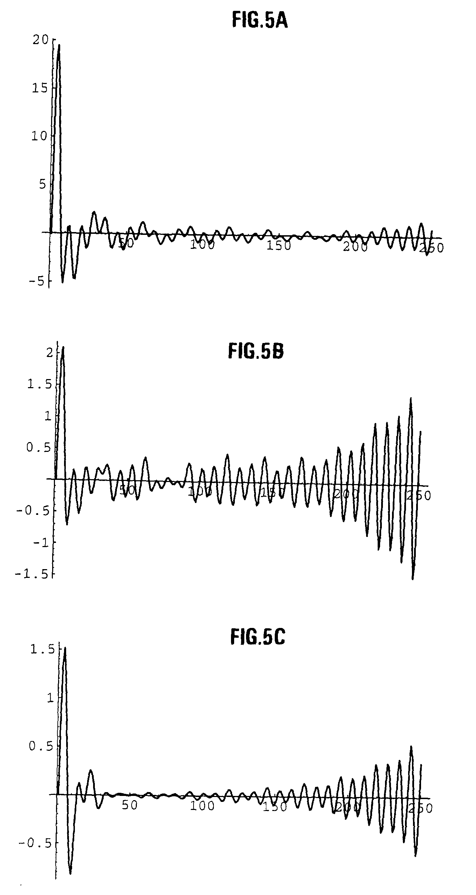

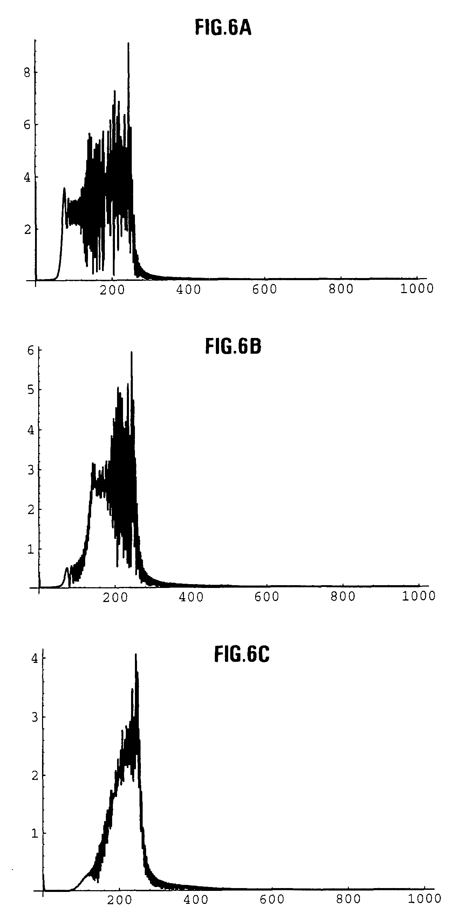

Un exemple synthétique, montrant l'amélioration du degré de pureté obtenu dans le cas d'un signal pilote composé de la somme de deux balayages de fréquence linéaires (de 16 à 64 et de 24 à 96 Hz) sur un sol ayant un taux de non-linéarité d'ordre 2 de 5% (comparé à 50%), est présenté sur les Fig. 4 et 5. On note l'amélioration de la qualité du signal corrélé en fonction de l'effort fait pour éliminer les termes indésirables (Fig. 6).

On peut poursuivre cette démarche pour éventuellement extraire un produit d'intermodulation d'ordre élevé $2\pi(mf_1 \pm nf_2)$ ou supprimer les termes pairs d'ordre $\geq 4$ du développement limité. L'intérêt pratique est en fait limité, l'énergie décroissant d'autant plus vite que l'ordre est élevé.

**Différents modes de mise en oeuvre de la méthode**

**A.- Variantes dues à la séquence d'émission**

Les configurations utilisables pour l'exploitation sismique du vibrateur selon l'invention résultent des combinaisons décrites ci-dessus :

- Vibration avec un seul type de balayage à deux composantes qui peut être exploité avec un signal pilote synthétique en $\Delta$ f (différence de fréquences) utilisé pour la corrélation des signaux reçus ou $\Sigma$ f (somme de fréquences), ainsi qu'avec le signal pilote fondamental et éventuellement avec les signaux pilotes harmoniques (conservation de tous les produits d'intermodulation) ;

- Vibration avec deux émissions successives et deux types de balayage à deux composantes dont l'un est en quadrature avec l'autre, variante qui ne peut être exploitée que par corrélation avec un signal pilote synthétique en $\Delta f$ et avec le signal pilote fondamental (les autres modes étant éliminés) ;

- Vibration avec quatre émissions successives et quatre types de balayage à deux composantes (quadrature et changement de signe $\phi = 0$, $\pi/2$, $\pi$, $3\pi/2$), variante qui ne peut être exploitée que par corrélation avec un pilote synthétique en $\Delta f$ (seul mode subsistant après élimination des termes impairs du développement limité aux 3 premiers termes).

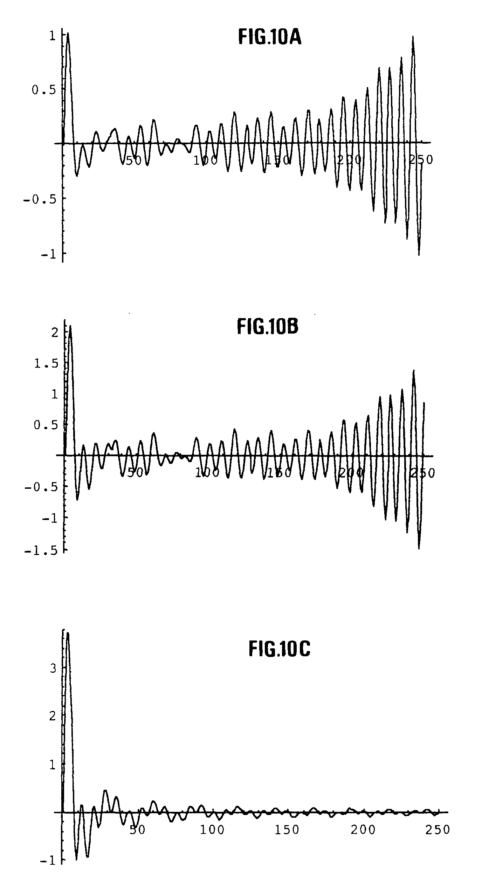

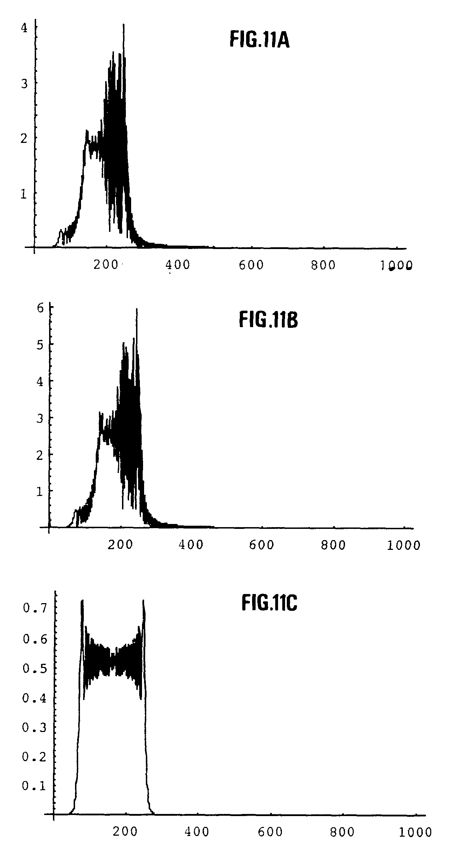

Les exemples des Fig. 10 et 11 correspondent à différentes séquences d'émission où le signal pilote composite est la somme à amplitude constante de deux rampes linéaires en fréquence et de pentes différentes d'une durée de 8s par exemple, appartenant respectivement aux deux bandes, ($f_1$=24 Hz à $f_2$=96 Hz) et ($f_3$=16 Hz à $f_4$=64 Hz). Le taux d'intermodulation est de 5% et le signal synthétique utilisé pour la corrélation est le signal ci-après :

$$S_{\Delta f} = \sin\left[2\pi(f_1 - f_3 + (f_2 + f_3 - f_4 - f_1)\frac{t}{2T})t\right]$$

entre 8 et 32 Hz. Dans le premier cas, la séquence d'émission est simple :

$$S(t) = \sin\left[2\pi(f_1 + (f_2 - f_1)\frac{t}{2T})t\right] + \sin\left[2\pi(f_3 + (f_4 - f_3)\frac{t}{2T})t\right]$$

Dans le deuxième cas (Fig.10b, 11b) la séquence d'émission est double et comporte deux émissions successives :

$$S_1(t) = \sin\left[2\pi(f_1 + (f_2 - f_1)\frac{t}{2T})t\right] + \sin\left[2\pi(f_3 + (f_4 - f_3)\frac{t}{2T})t\right]$$

suivie de

$$S_2(t) = \cos\left[2\pi(f_1 + (f_2 - f_1)\frac{t}{2T})t\right] + \cos\left[2\pi(f_3 + (f_4 - f_3)\frac{t}{2T})t\right]$$

Dans le troisième cas, (Fig.10c, 11c) la séquence d'émission est quadruple et comporte successivement les

deux signaux $S_1(t)$ et $S_2(t)$ précédents, suivis de $S_3(t) = - S_1(t)$ et $S_4(t) = - S_2(t)$ Cette simulation, faite pour un taux de conversion relativement faible (5%), montre, qu'en contrepartie d'une séquence plus compliquée telle que la séquence quadruple, le spectre B(f) (Fig.11) est très nettement amélioré.

Dans le cas où l'on cherche une extension vers les plus hautes fréquences, il faut noter que la corrélation avec le signal pilote à la fréquence somme

$$S_{\Sigma f} = \sin\left[2\pi(f_1 + f_3 + (f_1 + f_4 - f_1 - f_3)\frac{t}{2\pi})t\right]$$

n'a d'intérêt que si la fréquence d'échantillonnage du signal est suffisamment élevée pour respecter le critère de Nyquist.

**B.- Variantes dans la composition des signaux-pilote.**

Pour des signaux-pilote appliqués à la plaque du vibrateur, on peut retenir les compositions suivantes :

a/- une fréquence fixe hors de la plage à fréquence variable et une fréquence variable croissante,

b/- une fréquence fixe hors de la plage à fréquence variable et une fréquence variable décroissante,

c/- une fréquence variable croissante et une fréquence variable décroissante, telles que la différence de leurs fréquences ne soit jamais nulle.

d/- deux fréquences variables croissantes ou décroissantes de pente différente, telles que la différence de leurs fréquences ne soit jamais nulle.

Les variantes de composition c/ et d/ sont celles qui présentent le plus de souplesse.

**C.- Variantes dues à un choix particulier des bornes en fréquence**

Un choix judicieux des bornes des rampes de fréquence et des fréquences fixes peut permettre par exemple de juxtaposer exactement une couverture en fréquence intéressante en permettant, par exemple, la juxtaposition exacte des plages couvertes par les corrélations en $\Delta f$, f et $\Sigma$ f. En utilisant une fréquence fixe $f_0$ et une rampe variant de $f_1$ à $f_2$, avec $f_0 = f_1$ et $f_2 = 2 f_1$, on couvre ainsi une bande continue allant de 0 à 3 $f_0$. Au stade du traitement cela suppose de faire une égalisation de l'amplitude en fonction de la fréquence, et trois corrélations distinctes suivies d'une sommation.

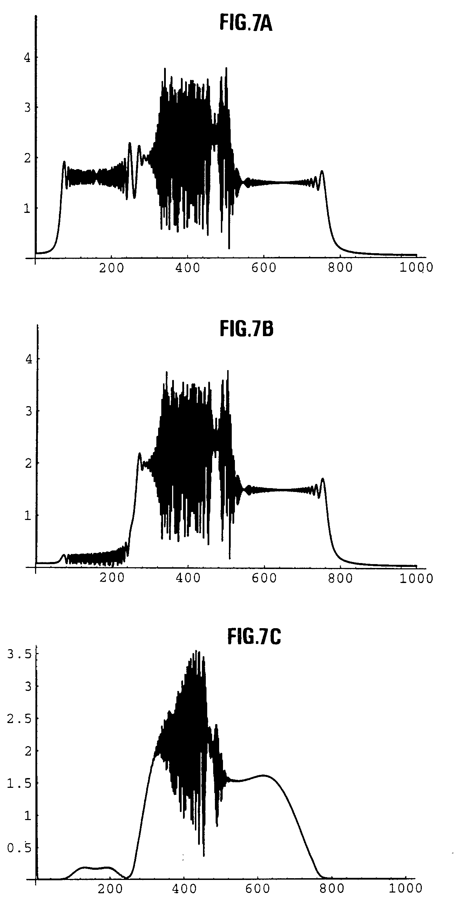

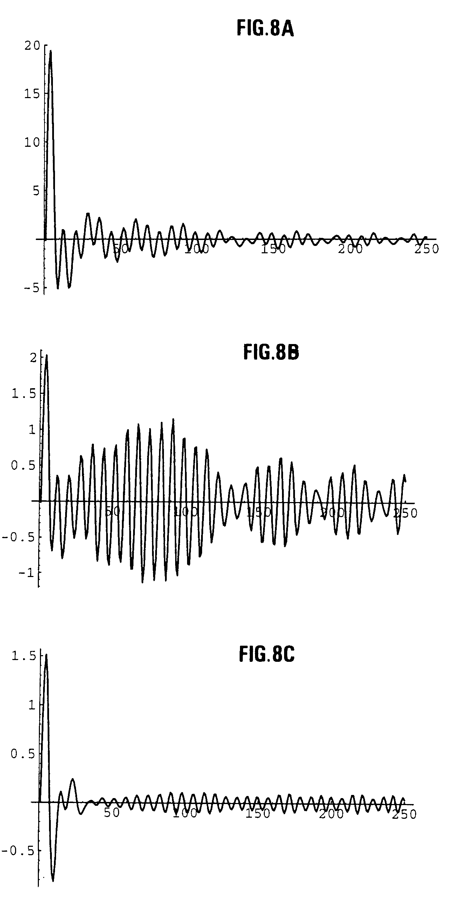

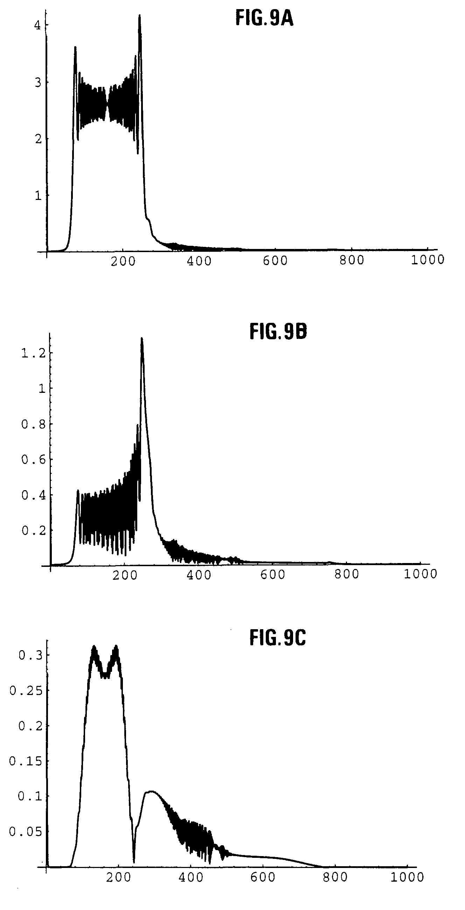

Dans le cas général, le chevauchement des bandes de fréquence perturbe la qualité du signal fourni par la corrélation. L'utilisation d'une fenêtre de pondération s'avère souvent indispensable pour réduire les rebonds à la corrélation comme le montrent les Fig. 4c à 6c et 7c à 9c).

**D.- Variantes liées au type des signaux pilotes**

On ne sortirait pas du cadre de l'invention en utilisant des rampes de fréquence autres que linéaires : rampes à variations logarithmiques, rampes à variations codées, rampes à variations aléatoires, etc.

**Revendications**

**1.** Vibrateur pour engendrer des vibrations dans le sol (M) comportant un générateur de vibrations unique (2), un module (A) de commande du générateur unique (2) adapté à lui appliquer à chaque émission un signal pilote obtenu par la combinaison d'au moins deux signaux de fréquences différentes (f1, f2), caractérisé en ce qu'il comporte des moyens de couplage pour appliquer étroitement le vibrateur contre le sol, et des moyens de transmission élastique non linéaire adaptés à engendrer dans le milieu des vibrations à une fréquence dépendant de la différence des fréquences (f1, f2) des deux signaux vibratoires, comprenant au moins une couche superficielle du sol présentant une discontinuité d'impédance acoustique par rapport aux couches sous-jacentes.

**2.** Vibrateur selon la revendication 1, caractérisé en ce que les moyens de transmission élastique non linéaire incluent un élément (6) de transmission élastique non linéaire interposé entre les moyens de couplage et la couche superficielle.

**3.** Vibrateur selon la revendication 2, caractérisé en ce que l'élément de transmission élastique non linéaire est réalisé dans un matériau présentant une discontinuité dans la courbe de variation de la déformation en fonction de la compression appliquée par les moyens de couplage.

**4.** Vibrateur selon l'une des revendications précédentes, caractérisé en ce que le module de commande (A) pour engendrer le signal pilote comporte un oscillateur à fréquence fixe et un oscillateur dont la fréquence peut varier à l'intérieur d'une plage de fréquence déterminée.

**5.** Vibrateur selon l'une des revendications 1 à 3, caractérisé en ce que le module de commande pour engendrer le signal pilote comporte deux oscillateurs (O1, O2) à fréquence variable chacune à l'intérieur d'une plage de fréquence déterminée.

**6.** Vibrateur selon la revendication 4 ou 5, caractérisé en ce que le module de commande (A) comporte un oscillateur (O1) dont la fréquence croît ou décroît linéairement dans la plage de fréquence.

**7.** Vibrateur selon la revendication 6, caractérisé en ce que le module de commande (A) comporte un premier oscillateur (O1) dont la fréquence croît linéairement dans une première plage de fréquence, et un deuxième oscillateur (O2) dont la fréquence décroît linéairement dans une deuxième plage de fréquence distincte de la première.

**8.** Vibrateur selon la revendication 7, caractérisé en ce que le module de commande (A) comporte deux oscillateurs (O1, O2) dont les fréquences varient linéairement dans le même sens, avec des pentes différentes, à l'intérieur de deux plages de variation distinctes l'une de l'autre.

**9.** Méthode pour explorer un milieu matériel par des vibrations à fréquence très basse avec émission de vibrations dans le milieu, réception des vibrations émanant du milieu en réponse aux vibrations émises et enregistrement des ondes reçues, caractérisée en ce que, à chaque émission, on applique à au moins un vibrateur (1), au moins un signal pilote composite obtenu par combinaison d'au moins deux signaux vibratoires de fréquences différentes et on applique les signaux engendrés par chaque vibrateur au milieu par l'intermédiaire de moyens (5, 6) de transmission élastique non linéaire de manière à engendrer dans le milieu des vibrations dont le spectre d'émission inclut au moins une fréquence égale à la différence des fréquences des deux signaux vibratoires.

**10.** Méthode selon la revendication 9, caractérisée en ce que l'on fait varier la fréquence d'au moins un des signaux entrant dans la combinaison à l'intérieur d'une bande de fréquence.

**11.** Méthode selon la revendication 10, caractérisée en ce que l'on fait varier les fréquences respectives des deux signaux entrant dans la combinaison à l'intérieur de deux bandes de fréquence.

**12.** Méthode selon la revendication 10 ou 11, caractérisée en ce que l'on pilote le vibrateur successivement par un premier signal pilote et par un deuxième signal pilote obtenu en déphasant les deux signaux vibratoires d'un quart de période.

**13.** Méthode selon la revendication 10 ou 11, caractérisée en ce que l'on pilote le vibrateur successivement par un premier signal pilote, par un deuxième signal pilote obtenu en déphasant les deux signaux vibratoires d'un quart de période et par deux autres signaux pilotes respectivement déphasés d'une demi-période par rapport au premier et au deuxième signal pilote.

**14.** Méthode selon l'une des revendications 11 à 13, caractérisée en ce que l'on sélectionne, parmi les dits signaux provenant du milieu, ceux qui sont relatifs à la différence des fréquences des deux signaux combinés, par corrélation avec un signal synthétique.

**15.** Méthode selon la revendication 14, caractérisée en ce que la fréquence du signal synthétique est la différence des deux fréquences.

**16.** Méthode selon l'une des revendications 10 à 15, caractérisée en ce que les moyens de transmission élastique non linéaire comportent un élément de transmission élastique non linéaire au contact du milieu matériel.

**17.** Méthode selon l'une des revendications 10 à 16, caractérisée en ce que les moyens de transmission élastique non linéaire incluent au moins une couche du milieu à travers laquelle le vibrateur applique les vibrations engendrées.

**18.** Méthode selon la revendication 17, caractérisée en ce que, le milieu où les vibrations sont engendrées étant une formation géologique, on capte et on enregistre les vibrations renvoyées par la formation géologique et on les combine avec des signaux dépendant des signaux émis, pour former une image sismique du sous-sol.

**FIG.1**

$$S(t) = S_1(t) + S_2(t)$$

$$y(t) = aS(t) + bS(t)^2 + \dots$$

M

**FIG.2**

$$S(t)$$

$$y(t)$$

**FIG.3**

**FIG.12**

$$S(t)$$

FIG.4A

FIG.4 B

FIG.4C

**FIG.5A**

**FIG.5B**

**FIG.5C**

**FIG.6A**

**FIG.6B**

**FIG.6C**

**FIG.7A**

**FIG.7B**

**FIG.7C**

**FIG.8A**

**FIG.8B**

**FIG.8C**

## FIG.9A

## FIG.9B

## FIG.9C

**FIG.10A**

**FIG.10B**

**FIG.10C**

**FIG.11A**

**FIG.11B**

**FIG.11C**

## DOCUMENTS CONSIDERES COMME PERTINENTS

**Office européen des brevets**

**RAPPORT DE RECHERCHE EUROPEENNE**

Numéro de la demande

EP 01 40 0051

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 818 773 A (LUCENT TECHNOLOGIES INC) 14 janvier 1998 (1998-01-14) | 1 | G01V1/047 |
| Y | * revendications 1-3 * | 9 | |
| Y | US 5 025 423 A (EARP RONALD L) 18 juin 1991 (1991-06-18) * revendication 1 * | 9 | |
| A | US 3 786 405 A (CHRAMIEC M ET AL) 15 janvier 1974 (1974-01-15) * colonne 2, ligne 14 - colonne 3, ligne 55; revendication 1 * | 1,4,9, 10,14, 15,17 | |

DOMAINES TECHNIQUES RECHERCHES (Int.Cl.7)

G01V
G01S
G10K

Le présent rapport a été établi pour toutes les revendications

| Lieu de la recherche | Date d'achèvement de la recherche | Examinateur |
|---|---|---|
| LA HAYE | 19 février 2001 | Häusser, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 0051

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

19–02–2001

| Document brevet cité au rapport de recherche | | Date de publication | Membre(s) de la famille de brevet(s) | | | Date de publication |
|---|---|---|---|---|---|---|
| EP 0818773 | A | 14-01-1998 | CA | 2206407 | A | 08-01-1998 |
| | | | JP | 10090426 | A | 10-04-1998 |
| | | | US | 5719823 | A | 17-02-1998 |
| US 5025423 | A | 18-06-1991 | DE | 69022562 | D | 26-10-1995 |
| | | | DE | 69022562 | T | 22-02-1996 |
| | | | EP | 0434229 | A | 26-06-1991 |
| | | | JP | 1992960 | C | 22-11-1995 |
| | | | JP | 3195994 | A | 27-08-1991 |
| | | | JP | 7011576 | B | 08-02-1995 |
| US 3786405 | A | 15-01-1974 | AU | 459096 | B | 20-03-1975 |
| | | | AU | 3766472 | A | 12-07-1973 |
| | | | BE | 778760 | A | 16-05-1972 |
| | | | CA | 950105 | A | 25-06-1974 |
| | | | DE | 2204028 | A | 10-08-1972 |
| | | | ES | 399340 | A | 01-06-1975 |
| | | | FR | 2124285 | A | 22-09-1972 |
| | | | GB | 1360901 | A | 24-07-1974 |
| | | | IT | 949657 | B | 11-06-1973 |
| | | | JP | 53028784 | B | 16-08-1978 |
| | | | NL | 7201109 | A,B, | 03-08-1972 |
| | | | NO | 133984 | B | 20-04-1976 |
| | | | SE | 377385 | B | 30-06-1975 |

EPO FORM P0460

Pour tout renseignement concernant cette annexe : voir Journal Officiel de l'Office européen des brevets, No.12/82